# EUROPÄISCHE PATENTSCHRIFT

(11) **EP 3 959 121 B1**
(45) Veröffentlichungstag und Bekanntmachung des Hinweises auf die Patenterteilung: **07.05.2025**
(21) Anmeldenummer: 20714998.0
(22) Anmeldetag: 25.03.2020
(51) Int. Cl.: B62M 6/45

(54) **VERFAHREN UND VORRICHTUNG ZUR ANSTEUERUNG EINES ANTRIEBS EINES PEDALBETRIEBENEN FAHRZEUGS**
METHOD AND DEVICE FOR CONTROLLING A DRIVE OF A PEDAL-OPERATED VEHICLE
PROCÉDÉ ET DISPOSITIF DE COMMANDE DE L'ENTRAINEMENT D'UN VÉHICULE À PÉDALES

(30) Priorität: 24.04.2019 DE 102019205858
(43) Veröffentlichungstag der Anmeldung: 02.03.2022
(73) Patentinhaber: Robert Bosch GmbH, 70442 Stuttgart (DE)
(72) Erfinder: DACKERMANN, Tim, 72072 Tuebingen (DE); BAUMGAERTNER, Daniel, 72070 Tuebingen (DE)
(86) Internationale Anmeldenummer: PCT/EP2020/058285
(87) Internationale Veröffentlichungsnummer: WO 2020/216557

(56) Entgegenhaltungen:
- DE-B3- 102016 209 570
- DE-B3- 102016 209 570

## Beschreibung

Die Erfindung betrifft ein Verfahren und eine Vorrichtung zur Ansteuerung eines Hilfsantriebs eines ansonsten mittels Pedalen durch den Fahrer angetriebenen Fahrzeugs.

### Stand der Technik

Seit einigen Jahren werden Elektroantriebe auch bei Mountainbike-Fahrrädern (MTB) eingesetzt. Hierbei gibt es verschiedene Ansteuerverfahren der Antriebe, die es dem Fahrer eines eMTB ermöglichen, Anstiege, hügeliges und matschiges Gelände mit Hilfe des Zusatzantriebs leichter zu bewältigen. So gibt es beispielsweise spezielle Bergauffahrten, sogenannte Uphill-Strecken, die ähnlich einer Berganfahrt (Downhill) die Fähigkeiten des MTB-Fahrers fordern, jedoch nur durch den zusätzlichen Antrieb bewerkstelligt werden können.

Bei derartigen MTB-Strecken gibt es jedoch üblicherweise Streckenabschnitte oder Fahrsituationen, bei denen eine ansonsten normale Steuerung des Antriebs über das erfasste Tretdrehmoment des Fahrers bzw. die Trittfrequenz der Tretkurbel bei einem eMBT nur eingeschränkt verwendet werden kann. Hierbei handelt es sich beispielsweise um Strecken im steinigen Gelände, bei denen ein normaler Betrieb der Pedalen nicht möglich ist, da bei der Drehbewegung der Pedalen die Gefahr auftritt, dass die Pedale an den Steinen anstößt oder sich sogar zwischen den Steinen verhakt. Um bei diesen Bedingungen einem Sturz zu entgehen, werden die Pedalen vom Fahrer üblicherweise in waagerechter Position gehalten und nur kurz betätigt, bevor sie wieder in die Ausgangslage zurückgedreht werden. Hierbei wird über die so erzeugten kurze Impulse auf die Pedale ein ausreichender Vortrieb erzeugt, um das MTB voran zu bringen.

Ein derartiges Verhalten bei der Benutzung eines eMTB kann jedoch dazu führen, dass die kurzen Impulse auf die Pedale eine kurzzeitige Unterstützung durch den Antrieb und somit eine Vortrieb erzeugen, der sofort bei dem Zurückdrehen der Pedalen wieder unterbunden wird. Diese ruckartige Fortbewegung durch den zusätzlichen Vortrieb des eMBT mittels des Antriebs während des Balanceakts kann sowohl zu Stürzen führen als auch die Freude am Fahren beeinträchtigen. Stattdessen ist vom Fahrer ein kontinuierlicher Vortrieb gewünscht, der zudem besser beherrschbar ist.

Die vorliegende Erfindung liegt daher zugrunde, ein System, bestehend aus Vorrichtung und Verfahren, zu schaffen, welches den eMTB bei einer derartigen Fahrsituation sinnvoll unterstützt.

Ferner ist aus DE 10 2016 209570 B3 ein Verfahren zur Ansteuerung eines Antriebs in Abhängigkeit einer Drehbewegungsgröße bekannt.

### Offenbarung der Erfindung

Mit der vorliegenden Erfindung wird ein Verfahren sowie ein Vorrichtung beziehungsweise ein pedalgetriebenes Fahrzeug beansprucht, welches eine besondere Fahrsituation erkennt und daraufhin den am Fahrzeugs befindlichen Zusatzantrieb gegenüber einer normalen Fahrsituation länger betreibt, ohne dass eine entsprechende Erfassung der Drehbewegung der Pedale durch den Fahrer vorliegt.

Zur Anwendung der beanspruchten Erfindung ist daher ein Fahrzeug vorgesehen, welches zumindest teilweise mit einem Pedalantrieb durch den Fahrer angetrieben werden kann. Zur Steuerung des dabei zusätzlich vorhanden Antriebs ist vorgesehen, dass mittels wenigstens eines ersten Sensors eine Drehbewegungsgröße erfasst wird, die die Drehbewegung der Pedale durch den Fahrer repräsentiert. Der am Fahrzeug befindlicher Antrieb ist dabei derart vorgesehen, dass er nur dann einen Vortrieb des Fahrzeugs erlaubt, z.B. in Form einer Unterstützung des Pedalantriebs, wenn die aktuelle Drehbewegungsgröße einen vorgegebenen Schwellenwert überschreitet. Hierdurch soll beispielsweise verhindert werden, dass der Antrieb zur Erzeugung eines Vortriebs angesteuert wird, wenn der Fahrer nicht oder nur unwesentlich in die Pedal tritt, d.h. keine oder nur eine geringe Drehbewegung der Tretkurbel mit den Pedalen erzeugt. Gleiches gilt für die ungewollte Betätigung der Pedale bei einem Schiebevorgang, z.B. in einer Situation, in der die Pedale an einem Widerstand oder an den Füßen anstößt. Zur Erkennung der ungewollten Betätigung der Pedale kann zudem noch eine Geschwindigkeitsgröße des Fahrzeugs erfasst werden, die die Längsgeschwindigkeit repräsentiert. Hierdurch kann verhindert werden, dass die Erfindung bei geringen Geschwindigkeiten angewandt wird.

Zur Umsetzung des erfindungsgemäßen Verfahren beziehungsweise der erfindungsgemäßen Vorrichtung wird mittels des wenigstens einen ersten Sensors die Drehbewegungsgröße während eines Erfassungszeitraums erfasst. In Abhängigkeit von dieser zeitlich aufgelösten Drehbewegungsgröße wird eine Fahrsituation erkannt, dass der Fahrer die linke und rechte Pedale im Wesentlichen um die waagerechte Stellung hin und her bewegt. Diese Bewegung wird üblicherweise dadurch erreicht, dass der Fahrer kurze Tritte auf die Pedale ausübt, ohne den unteren Punkt der Kurbeldrehung zu erreichen, bevor er die entsprechende Pedale wieder zurück zieht. Hierbei ist es auch möglich, dass der Fahrer nur auf einer Seite diese Tritte und somit die Antriebsimpulse ausübt, während er mit einem Tritt auf die andere Pedale beide Pedalen wieder in die Waagerechte bringt. Wird von dem Verfahren oder einer Vorrichtung/einem System eine derartige Fahrsituation erkannt, wird der Antrieb des Fahrzeugs derart angesteuert, dass er eine vorgebbare Zeitdauer weiterhin einen Vortrieb liefert, selbst wenn die normale Steuerung eine Abschaltung erfordern würde, z.B. bei der Unterschreitung des vorgegebenen Schwellenwerts.

Mit der vorliegenden Erfindung wird somit ermöglicht, dass in einer speziellen Fahrsituation, z.B. im Rahmen einer eMTB Betätigung, der Antrieb eine Unterstützung des Vortriebs ermöglicht, bei denen gemäß der Ansteuerbedingungen (ohne Betätigung der Pedale kein Vortrieb durch einen zusätzlichen Antrieb) keine Unterstützung vorgesehen ist. Dies ermöglicht nicht nur einen kontinuierlichen Ablauf des Fahrens während einer solchen speziellen Fahrsituation sondern es verhindert auch ungewollte kurzzeitige Unterstützungen durch den Antrieb, den der Fahrer während einer solchen Fahrsituation, in der er sich auf die Balance konzentriert, zusätzlich kompensieren muss.

Zur Erfassung der Drehbewegungsgrößen mittels des ersten Sensors eignet sich beispielsweise ein Drehmomentsensor oder ein Trittfrequenzsensor, welche bei gängigen Elektrofahrrädern bereits vorhanden sein können. Dabei kann beispielsweise anhand des erfassten durch den Fahrer auf die Pedalen erzeugten Drehmoments erkannt werden, ob einem kurzen Trittimpuls eine Ruhephase oder sogar ein negatives Drehmomentsignal nachfolgt. Alternativ kann auch die Trittfrequenz herangezogen werden, um ein Indiz für die entsprechende waagerechte Ausrichtung der Pedalen zu erfassen. Darüber hinaus ist auch möglich, die Stellung der Pedalen direkt zu erfassen. Hierzu können Positionssensors vorgesehen sein, die zumindest die Position der Pedalen in der waagerechten Stellung erfassen. Weiterhin ist auch ein Winkelsensor möglich, der die Auslenkung der Pedalen erfasst. Aus den so erfassten Sensorgrößen, insbesondere deren zeitlichen Veränderung, können einzeln oder in Kombination Schlüsse gezogen werden, ob der Fahrer eine kontinuierliche Drehbewegung mit den Pedalen um die Tretkurbel erzeugt oder die Pedalen im Wesentlichen in der Waagerechten hält. So kann ein kurzer Trittimpuls in Verbindung mit dem Nachweis einer nicht vollständig gedrehten Pedalen um die Tretkurbel ein Indiz für die spezielle zu erkennende Fahrsituation sein.

In einer Weiterbildung der Erfindung kann vorgesehen sein, dass zusätzlich der Zustand des befahrenen Untergrunds beziehungsweise die Steigung des Untergrunds zur Anwendung der vorliegenden Erfindung herangezogen wird. Hierbei wird erfasst, inwieweit das Fahrzeug einen Anstieg hinauf fährt oder sich in unwegsamen Gelände bewegt, um das erfindungsgemäße Verfahren anzuwenden. Da die beschriebene spezielle Fahrsituation gerade bei Anstiegen oder unwegsamen Gelände einen Vorteil vorkommen, wird die verlängerte Ansteuerung des Antriebs gerade nicht bei Fahrten in der Ebene oder bergab vorgenommen. Um einen Anstieg oder unwegsames und unebenes Gelände zu erkennen, kann das Fahrzeug mit wenigstens einem zweiten Sensor ausgestattet sein, mit dessen Sensorgröße eine Fahrbahngröße bestimmt wird, die den Untergrund repräsentiert. Wird daraufhin anhand der Fahrbahngröße ein unebenes Gelände oder ein Anstieg erkannt, wird die Ansteuerung des Antriebs bei Erkennung der im Wesentlichen waagerechten Bewegung der Pedalen entsprechend verlängert. Als zweite Sensoren zur Erfassung des Untergrunds eignet sich beispielsweise ein Beschleunigungssensor, ein Geschwindigkeitssensor, ein Steigungs- oder Neigungssensor. Darüber hinaus ist auch möglich, einen Im Fahrzeug befindlichen Stoßdämpfer mit einem entsprechenden Sensor auszustatten, z.B. einem Wegesensor, der die Erschütterungen und Dämpfungsbewegungen beim Befahren des Untergrunds erfasst. Mit Hilfe der so erfassten Sensorgrößen kann auch die Untergrund in Form einer Fahrbahngröße bzw. einer Fahrbahninformation geschlossen werden.

Optional kann vorgesehen sein, die Zeitdauer, in der der Antrieb angesteuert wird, ohne dass eine entsprechende gleichzeitig stattfindende Betätigung der Pedale durch den Fahrer stattfindet, von der bestimmten Fahrbahngröße oder der erfassten Sensorgröße des zweiten Sensors abhängig zu wählen. So kann vorgesehen sein, dass die Zeitdauer für den Nachlauf des Antriebs größer wird, wenn die Steigung ebenfalls größer ist oder das Geländer unebener ist.

Bevorzugt ist die Zeitdauer, in der der Antrieb weiterhin angesteuert bzw. betrieben wird, derart gewählt, dass die Zeitdauer mit der Aktivierung des Antriebs durch einen nächsten stoßartigen Tritt durch einen Fahrer überlappt.

Bevorzugt erfolgt die Ansteuerung des Antriebs in Abhängigkeit der erkannten Steigung bzw. dem erkannten Untergrund und/oder der erfassten Unebenheit derart, dass eine vorgegebene Fahrradbeschleunigung eingestellt oder nicht überschritten wird

Die vorliegenden Erfindung kann generell bei jedem Fahrzeug verwendet werden, welches mittels Pedalen aber auch zusätzlichem Antrieb vorwärts bewegt werden kann. Besonders interessant ist die Erfindung jedoch, wenn sie bei einem Elektrofahrrad eingesetzt wird. Hierbei ergeben sich darüber hinaus weitere Anwendungsmöglichkeiten, wenn die Erfindung bei einem Elektrofahrrad verwendet wird, welches bevorzugt im Gelände benutzt wird, z.B. einem Mountainbike (MTB) bzw. einem elektrisch antreibbaren Mountainbike (eMTB). In diesen Fällen kann das Verfahren auf die bereits in dem Elektrofahrrad vorhandenen Sensoren zurückgreifen, um die spezielle Fahrsituation zu erkennen und die entsprechende Ansteuerung des Antriebs zu ermöglichen.

Weitere Vorteile ergeben sich aus der nachfolgenden Beschreibung von Ausführungsbeispielen bzw. aus den abhängigen Patentansprüchen.

### Kurze Beschreibung der Zeichnungen

In den Diagrammen der Figuren 1 bis 3 wird anhand von Zeitverläufen verschiedener Parameter die Erfindung verdeutlicht. Das Blockschaltbild der Figur 4 zeigt eine mögliche Realisierung einer erfindungsgemäßen Vorrichtung. Das Flussdiagramm der Figur 5 beschreibt die Erkennung einer Spezialsituation während der Betätigung der Pedalen durch den Fahrer des Fahrzeugs. Mit dem Flussdiagramm der Figur 6 wird ein Verfahren beschrieben, welches in Abhängigkeit der erkannten Spezialsituation die Ansteuerung des Antriebs des Fahrzeugs steuert.

### Ausführungsformen der Erfindung

Wie bereits vorstehend ausgeführt, kann es bei Fahrten mit einem Mountainbike zu Fahrsituationen kommen, in denen eine normale Betätigung der Pedalen bzw. der Tretkurbel problematisch ist, da dadurch ein Aufsetzen der Pedalen auf den Untergrund z.B. der dort befindlichen Steine vorkommen kann. In dieser speziellen Fahrsituation versucht der Fahrer des Mountainbikes daher, möglichst mit nahezu waagerecht ausgerichteten Pedalen und kurzen Antriebstritten vorwärts zu kommen, ohne dass die Pedalen den unteren Umkehrpunkt erreichen. Eine derartige Pedalbewegung kann jedoch bei elektrischen Antrieben eines Elektrofahrrads und insbesondere bei einem eMTB teilweise zu unerwünschten stoßweisen Vortrieben führen, die beim Fahrer zusätzliche Konzentration zur Kompensation während des Balancierens erfordern. Stattdessen wäre es sinnvoller, wenn der Antrieb bei der Erkennung einer derartigen speziellen Fahrsituation kontinuierlich betrieben wird, um so auch dem Fahrer eine beherrschbare Rahmenbedingung zu liefern.

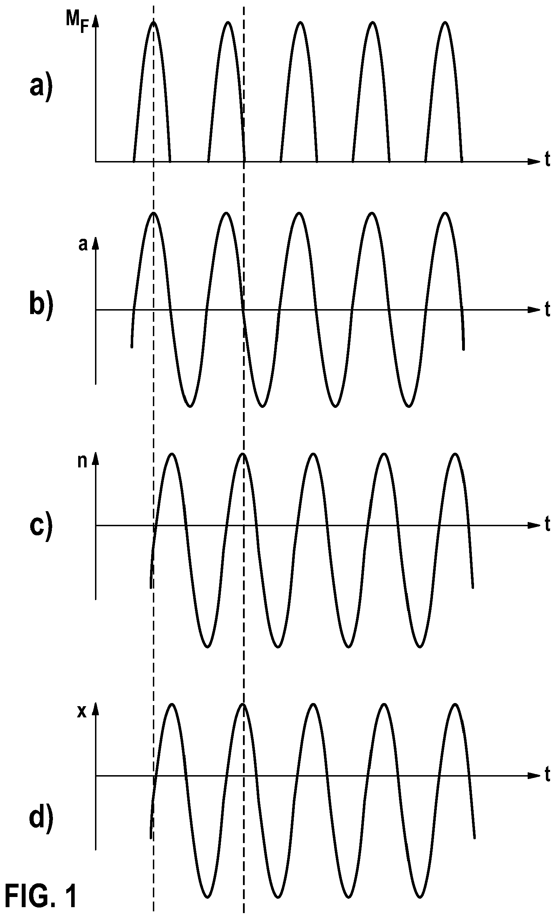

Anhand der Diagramme a) bis d) der Figur 1 wird zunächst die spezielle Fahrsituation, die sich aus dem gleichzeitigen Balancieren und der Fortbewegung bei im Wesentlichen waagerecht gehaltenen Pedalen ergeben. Im Diagramm a) ist das Fahrerdrehmoment M_{F} während der speziellen Fahrsituation dargestellt, welches sich aufgrund eines stoßartigen bzw. impulsartigen Betätigung der Pedalen ergibt. Dabei wird üblicherweise nur eine der Pedalen stoßweise betätigt, während die zweite Pedale dazu verwendet werden kann, die erste wieder in die waagerechte Stellung zurückzubringen. Alternativ hierzu können auch Klickpedalen oder sonstige Befestigungen der Schuhe an der Pedale verwendet werden, um die Pedale zurück in die waagerechte Stellung zu bringen. Während der kurzzeitigen stoßartigen Betätigung der Pedale wird ein Antriebsimpuls erzeugt, welche über die Kette zu einer Beschleunigung a des Fahrrads/eMTBs führt (siehe Figur 1 b)). Die Beschleunigung des Fahrrads nimmt sofort ab, wenn der Fahrer nicht mehr in die Pedale tritt. Stattdessen wird das Fahrrad abgebremst.

Auch anhand der Trittfrequenz n lässt sich diese spezielle Fahrsituation erkennen, wie es in der Figur 1c dargestellt ist. Hierbei liegt zunächst bei waagerechter Pedalstellung keine Bewegung der Pedale und somit keine Trittfrequenz vor. Sobald der Fahrer in die Pedale tritt, findet eine Drehbewegung statt, so dass eine Trittfrequenz ableitbar ist, auch wenn keine vollständige Umdrehung der Pedale um die Tretkurbel durchgeführt wird. Nach der Durchführung des stoßartigen Tritts kommt es zum Zurückziehen bzw. - drehen der Pedalen, so dass eine negative Tretfrequenz erkannt werden kann. Ein ähnliches Verhalten lässt sich darüber hinaus auch mittels eines Positionssensor oder eines Winkelsensors ableiten. Hierbei kann sogar noch genauer die Position oder Winkelveränderung jeder der beiden Pedalen erkannt werden bzw. es reicht schon die Erkennung der Position oder der Winkelveränderung einer einzelnen Pedale aus.

Im Diagramm der Figur 1 d) ist darüber hinaus der Federweg x eines Stoßdämpfers während der speziellen Fahrsituation dargestellt. Auch über diesen Federweg x lässt sich die stoßartige Betätigung der Pedalen erkennen, da sich die Beschleunigung, die das Fahrrad aufgrund des impulsartigen Vortriebs erfährt, in Stauchungen bzw. Entspannungen des Stoßdämpfers widerspiegelt.

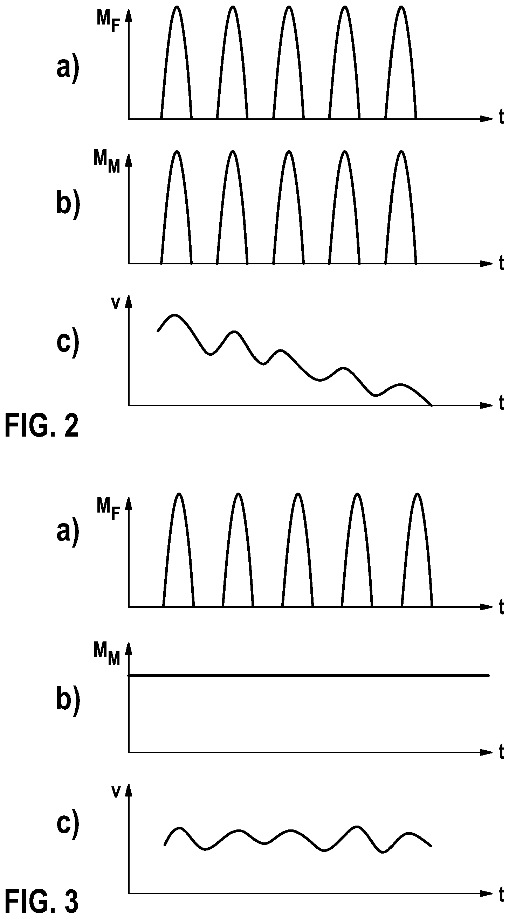

In den Diagrammen a) bis c) der Figur 2 wird die Ansteuerung des Antriebs mit der Erzeugung des Antriebsdrehmoments M_{M} sowie deren Auswirkung auf die Geschwindigkeit v des Elektrofahrrads bzw. des eMTBs während der beschriebenen speziellen Fahrsituation beschrieben. Aufgrund der stoßartigen Pedalbetätigung des Fahrers gemäß dem Diagramm in Figur 2 a) kommt es zu impulsartigen Unterstützungen des Antriebs mit der Erzeugung eines Antriebsdrehmoments M_{M} gemäß der Figur 2 b), wenn die Bedingungen zur Antriebsunterstützung erfüllt sind. Aus den beiden stoßartige bzw. impulsartig aufgebrachten Vortriebsdrehmomenten M_{F} und M_{M} resultierend eine Geschwindigkeit v gemäß der Figur 2 c). Die resultierende Geschwindigkeit wird im Zeitverlauf abnehmen, da die Tretpausen sowie die nur impulsartig erzeugten Antriebsdrehmomente M_{M} des Antriebs keinen konstanten Vortrieb ermöglichen.

Stattdessen wird erfindungsgemäß vorgeschlagen, bei der Erkennung der beschriebenen speziellen Fahrsituation den Antrieb auch dann noch weiter zu betreiben, wenn von den zugehörigen Sensoren keine Pedaltätigkeit erkannt wird, die bei einem ansonsten normalen Betrieb ausreichend für eine Zuschaltung des Antriebs ist. Eine derartige Umsetzung wird anhand der Diagramme a) bis c) der Figur 3 beschrieben. Hierbei wird ausgehend von der stoßartigen Pedalbetätigung des Fahrers gemäß der Figur 3 a) der Antrieb mit einer vorgebbaren Zeitdauer weiterbetrieben. Im Beispiel des Diagramms der Figur 3 b) erfolgt dieser Nachlauf mit einem konstanten Antriebsdrehmoment M_{M} und einer vorgegebenen Zeitdauer, die derart lang gewählt ist, dass sie mit der Aktivierung des Antriebs durch den nächsten stoßartigen Tritt durch den Fahrer überlappt. Die daraus resultierende Geschwindigkeit v des Fahrrads/eMTBs ist in dem Diagramm der Figur 3 b) zu sehen. Es ist zwar weiterhin eine veränderliche Geschwindigkeit v zu erkennen, jedoch wird durch den konstanten Vortrieb mittels des Antriebsdrehmoments M_{M} eine im wesentlichen gleichbleibende Geschwindigkeit ermöglicht.

Die vorgebbare Zeit der Verlängerung der Ansteuerung des Antriebs bzw. der Nachlaufzeit kann beispielsweise in Abhängigkeit der erkannten Umgebung, z.B. des Untergrunds oder von fahrdynamischen Größen abhängig gewählt werden. Auch eine individuelle Vorgabe aufgrund des Fahrverhaltens des Fahrers ist möglich. Hierzu könnte auf erfasste und abgespeicherte Werte des Fahrverhaltens des Fahrers zurückgegriffen werden.

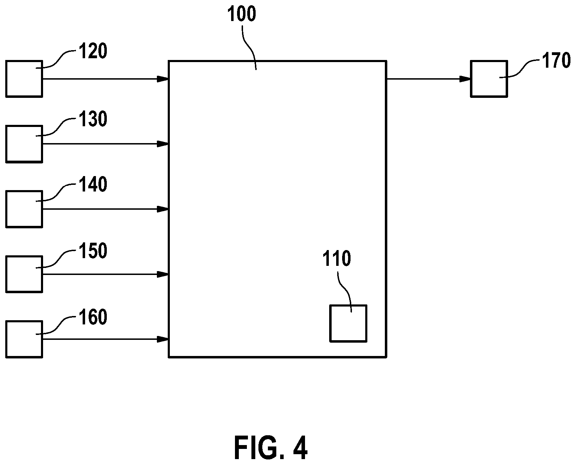

Anhand des Blockschaltbilds der Figur 4 ist beispielhaft eine mögliche Realisierung der Erfindung in einer Vorrichtung dargestellt. Hierzu ist eine Steuereinheit 100, wenigstens einen ersten Sensor und einen Antrieb 170 vorgesehen, mittels derer das erfindungsgemäße Verfahren ablaufen kann. Diese Steuereinheit 100 kann dabei als Steuereinheit für den Antrieb 170 eines Elektrofahrrads oder eine eMTBs vorgesehen sein. Es kann jedoch auch vorgesehen sein, dass diese Steuereinheit 100 unabhängig von der Steuereinheit des Antriebs nur in den erkannten speziellen Fahrsituationen die Ansteuerung des Antriebs 170 übernimmt.

Die Steuereinheit 100 kann einen Speicher 110 enthalten, in dem die erfassten Sensorgrößen sowie Schwellenwerte, Vergleichswerte oder individuelle Fahrerdaten abgespeichert sind. Zur Erkennung der speziellen Fahrsituation erfasst die Steuereinheit 100 die Sensorgrößen wenigstens eines ersten Sensors. Dieser erste Sensor kann beispielsweise ein Drehmomentsensor 120 sein, der das Fahrerdrehmoment auf die Tretkurbel erfasst. Alternativ oder zusätzlich kann ein Drehzahlsensor 130 vorgesehen sein, der die Drehzahl oder die Trittfrequenz erfasst. Weiterhin ist möglich, dass die die Steuereinheit 100 mittels eines Beschleunigungs- oder Geschwindigkeitssensors 140 die Beschleunigung bzw. Geschwindigkeit erfasst. Für weitere Ausführungen der Erfindung kann die Steuereinheit 100 die Sensorgrößen eines Neigungs- oder Steigungssensors 150 sowie mittels eines Wegesensors 160 den Federweg x eines Stoßdämpfers erfassen.

Optional oder zusätzlich kann auch vorgesehen sein, dass die Steuereinheit 100 die Sensorgrößen eines Kraftsensors an wenigstens einer Pedale, eines Positionssensors an der Tretkurbel oder eines Winkelsensors erfasst, um die Stellung bzw. Position wenigstens einer Pedale zu erfassen.

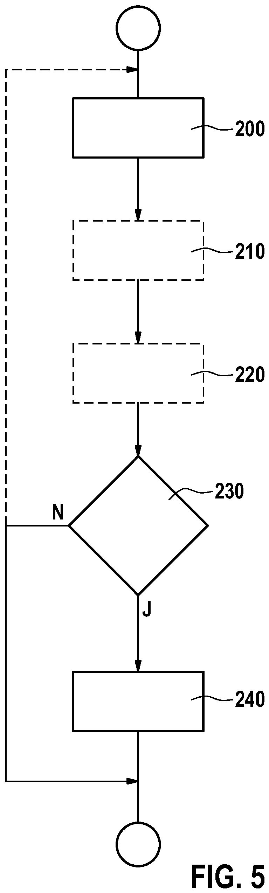

Das Flussdiagramm der Figur 5 zeigt ein mögliches Verfahren, mit dem die beschriebene Fahrsituation erfasst werden kann. Hierzu werden in einem ersten Schritt 200 Sensorgrößen erfasst, die die Bewegung der Pedale durch den Fahrer repräsentieren. Da es sich bei der speziellen Fahrsituation um eine kurzzeitige Bewegung handelt, ist es erforderlich, die Sensorgrößen während eines gewissen Erfassungszeitraums zu erfassen. Abhängig von den so während des Erfassungszeitraums erfassten Sensorgrößen kann dann in einem nachfolgenden Schritt 230 erkannt werden, ob die spezielle Fahrsituation vorliegt. In diesem Fall wird in einem nächsten Schritt 240 eine entsprechende Information erzeugt, die für das weitere Verfahren zur Verfügung steht. Wird jedoch im Schritt 230 erkannt, dass die spezielle Fahrsituation nicht vorliegt, kann das Verfahren gemäß der Figur 5 beendet oder erneut mit dem Schritt 200 durchlaufen werden.

In einem optionalen Ausführungsbeispiel kann vorgesehen sein, dass vor dem Schritt 230 in einem Schritt 210 der Federweg eines Stoßdämpfers und/oder in einem Schritt 220 die Beschleunigung des Fahrzeugs bzw. des Elektrofahrrads erfasst wird.

Zur Erkennung der speziellen Fahrsituation kann im ersten Schritt 200 jede Sensorgröße erfasst werden, die die Bewegung der Pedale durch den Fahrer charakterisiert. So kann das Fahrertretdrehmoment genauso erfasst werden wie die Trittfrequenz. Darüber hinaus ist auch möglich, die Position oder Stellung der Pedalen direkt zu erfassen oder mittels eines Winkelsensors die Bewegung aufzunehmen. Im Schritt 230 kann dabei die Erkennung der speziellen Fahrsituation anhand einer einzelnen zeitaufgelösten Sensorgröße erfolgen oder mittels der Zusammenschau von wenigstens zwei zeitaufgelösten Sensorgrößen. So kann beispielsweise die zeitliche Abfolge des Fahrertretdrehmoments in Verbindung mit der Trittfrequenz als Indiz für die spezielle Fahrsituation verwendet werden. Es ist jedoch auch möglich, aufgrund eines Vorzeichenwechsels der zugrunde liegenden Sensorgröße auf die spezielle Fahrsituation zu schließen, beispielsweise durch eine negative Trittfrequenz oder eine positive/negative Bewegung der Stoßdämpfer. Darüber hinaus können weitere Sensorgrößen zur Erkennung verwendet werden, die vorstehend erwähnt worden sind.

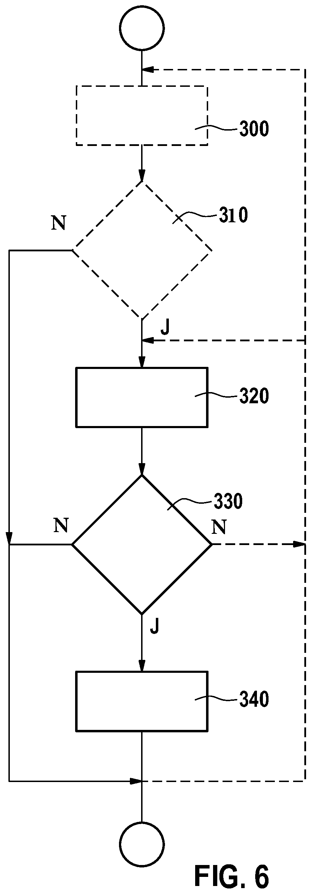

Das Flussdiagramm der Figur 6 beschreibt ein Verfahren, welches ausgehend von der erkannten speziellen Fahrsituation die Verlängerung der Ansteuerung des Antriebs ermöglicht. Hierbei kann das Verfahren bewusst bei der Erkennung der speziellen Fahrsituation gestartet werden (siehe Verfahren gemäß der Figur 5). Alternativ kann die Erfassung der notwendigen Sensorgrößen in einem Schritt 320 sowie die Erkennung als solches in einem Schritt 330 durchgeführt werden. Wird im Schritt 330 erkannt, dass die spezielle Fahrsituation nicht vorliegt, kann das Verfahren beendet werden oder erneut gestartet werden. Bei Erkennung der speziellen Fahrsituation im Schritt 330 oder bei Einleitung des Verfahrens gemäß dem Vorliegen der Information über die spezielle Fahrsituation kann in einem nachfolgenden Schritt 340 die Ansteuerung und somit die Verlängerung der Erzeugung eines Vortrieb durchgeführt werden. Auch hier kann das Verfahren damit beendet werden oder erneut mit der Erfassung der notwendigen Sensorgrößen zur Erkennung der speziellen Fahrsituation durchlaufen werden.

Optional kann vorgesehen sein, dass in einem Schritt 300 vor dem Schritt 340 die Umgebung, das Gelände, der Untergrund und/oder die Steigung erfasst werden, auf dem sich das Elektrofahrrad bewegt. Hierzu können Steigungssensorgrößen mittels eines geeigneten Sensors ebenfalls wir Beschleunigungssensorgrößen oder Federwege von Stoßdämpfern erfasst werden. Im nachfolgenden Schritt 310 wird geprüft, ob es sich um eine Umgebung, ein Gelände, einen Untergrund und/oder eine Steigung handelt, bei der das erfindungsgemäße Verfahren durchgeführt werden soll. Ist das nicht der Fall, wird das Verfahren beendet. So kann vorgesehen sein, dass bei einer Fahrt in der Ebene oder bergab das erfindungsgemäße Verfahren nicht einsetzbar sein soll. Andernfalls kann mit der Erfassung und Erkennung der speziellen Fahrsituation z.B. mit den Schritten 320 und 330 fortgefahren werden.

In einem weiteren Ausführungsbeispiel kann ebenfalls vorgesehen sein, dass die Zeitdauer, während der die Antriebssteuerung im Schritt 340 verlängert wird, von der erfassten Steigung, dem erkannten Untergrund und/oder der erfassten Unebenheit abhängig vorgegeben wird. Optional kann auch vorgesehen sein, dass die Zeitdauer von einem abgespeicherten Fahrverhalten des Fahrers abhängig vorgegeben wird.

Weiterhin kann vorgesehen sein, dass die Ansteuerung des Antriebs in Abhängigkeit der erkannten Steigung bzw. dem erkannten Untergrund und/oder der erfassten Unebenheit derart erfolgt, dass eine vorgegebene Fahrradbeschleunigung eingestellt oder nicht überschritten wird. Hierbei kann beispielsweise bei einer erkannten Schotterstrecke die Beschleunigung durch den Antrieb bzw. die Beschleunigung die das gesamten Fahrrad durch den Antrieb erfährt, auf einen vorgegebenen Schotterbeschleunigungswert begrenzt werden. In einem weiteren Beispiel kann bei einer erkannten Steigung eine gezielte und somit ebenfalls vorgegebene Beschleunigung eingestellt werden, so dass eine Mindestgeschwindigkeit am Berg erreicht werden. Im umgekehrten Fall kann bei einer Bergabfahrt eine niedrige Beschleunigungsgröße vorgegeben werden.

## Patentansprüche

1. Verfahren zur Ansteuerung eines Antriebs eines pedalgetriebenen Fahrzeugs, insbesondere eines Elektrofahrrads, wobei das Verfahren
• mittels wenigstens eines ersten Sensors eine Drehbewegungsgröße erfasst, die die Drehbewegung der Pedale durch den Fahrer repräsentiert, und
• den Antrieb (170) des Fahrzeugs zur Erzeugung eines Vortriebs ansteuert, falls die aktuelle Drehbewegungsgröße einen vorgegebenen Schwellenwert überschreitet,
**dadurch gekennzeichnet dass**
das Verfahren
• mittels des wenigstens einen ersten Sensors eine zeitlich aufgelöste Drehbewegungsgröße erfasst, die die Drehbewegung der Pedale während eines Erfassungszeitraums durch den Fahrer repräsentiert, und
• in Abhängigkeit der zeitlich aufgelösten Drehbewegungsgröße eine Fahrsituation erkennt, in der die Pedalen im Wesentlichen um die waagerechte Stellung hin und her bewegt werden, und
• den Antrieb in Abhängigkeit der erkannten Fahrsituation zur Erzeugung des Vortriebs für eine vorgebbare Zeitdauer weiterhin ansteuert, falls die aktuelle Drehbewegungsgröße den vorgegebenen Schwellenwert erreicht oder unterschreitet.

2. Verfahren nach Anspruch 1, **dadurch gekennzeichnet dass** das Verfahren
• als Drehbewegungsgröße das Fahrerdrehmoment auf die Pedalen mittels eines Drehmomentsensors (120) und/oder die Trittfrequenz des Fahrers mittels eines Drehzahlsensors (130) erfasst, und
• die Fahrsituation in Abhängigkeit des zeitaufgelösten Fahrerdrehmoments und/oder der zeitaufgelösten Trittfrequenz erkennt.

3. Verfahren nach Anspruch 1 oder 2, **dadurch gekennzeichnet dass** das Verfahren
• mittels der erfassten Sensorgrößen wenigstens eines zweiten Sensors eine Fahrbahngröße bestimmt, die den Untergrund repräsentiert, auf dem sich das Fahrzeug bewegt, und
• die Erkennung der Fahrsituation durchführt, falls die Fahrbahngröße eine Befahrung eines unebenen Geländes und/oder einer Steigung anzeigt
wobei insbesondere vorgesehen ist, dass die Fahrbahngröße mittels eines erfassten Beschleunigungssignals, eines Geschwindigkeitssignals, eines Steigungssignals oder eines Wegesignals erzeugt wird.

4. Verfahren nach Anspruch 3, **dadurch gekennzeichnet dass** die Zeitdauer, in der der Antrieb weiterhin angesteuert bzw. betrieben wird, in Abhängigkeit von der bestimmten Fahrbahngröße, der erfassten Steigung und/oder der erfassten Beschleunigung vorgegeben wird.

5. Verfahren nach einem der Ansprüche 3 oder 4 , **dadurch gekennzeichnet, dass** die Zeitdauer, in der der Antrieb weiterhin mit konstanten Antriebsdrehmoment M_{M} angesteuert bzw. betrieben wird, derart gewählt ist, dass die Zeitdauer mit der Aktivierung des Antriebs durch einen nächsten stoßartigen Tritt durch einen Fahrer überlappt.

6. Verfahren nach einem der Ansprüche 3 bis 5, **dadurch gekennzeichnet, dass** die Ansteuerung des Antriebs in Abhängigkeit der erkannten Steigung bzw. dem erkannten Untergrund und/oder der erfassten Unebenheit derart erfolgt, dass eine vorgegebene Fahrradbeschleunigung eingestellt oder nicht überschritten wird.

7. Vorrichtung zur Ansteuerung eines Antriebs eines pedalgetriebenen Fahrzeugs, insbesondere eines Elektrofahrrads, wobei die Vorrichtung eine Steuereinheit (100), wenigstens einen ersten Sensor und einen Antrieb (170) aufweist, die geeignet ist, das Verfahren gemäß einem der Ansprüche 1 bis 6 durchzuführen

8. Pedalgetriebenes Fahrzeug, insbesondere ein Elektrofahrrad, mit einer Vorrichtung gemäß Anspruch 7.

## Claims

1. Method for activating a drive of a pedal-driven vehicle, in particular an electric bicycle, wherein the method
• detects a rotational movement variable, which represents the rotational movement of the pedals by the cyclist, by means of at least one first sensor, and
• activates the drive (170) of the vehicle to generate propulsion if the current rotational movement variable exceeds a specified threshold value,
**characterized in that**
the method
• detects a time-resolved rotational movement variable, which represents the rotational movement of the pedals by the cyclist during a detection period, by means of the at least one first sensor, and
• depending on the time-resolved rotational movement variable identifies a driving situation in which the pedals are moved back and forth substantially about the horizontal position, and
• continues to activate the drive depending on the identified driving situation to generate propulsion for a specifiable period of time if the current rotational movement variable reaches or falls below the specified threshold value.

2. Method according to Claim 1, **characterized in that** the method
• detects, as the rotational movement variable, the torque applied by the cyclist to the pedals by means of a torque sensor (120) and/or the cadence applied by the cyclist by means of a rotational speed sensor (130), and
• identifies the driving situation depending on the time-resolved torque applied by the cyclist and/or the time-resolved cadence.

3. Method according to Claim 1 or 2, **characterized in that** the method
• determines a roadway variable, which represents the underlying surface on which the vehicle is moving, by means of the detected sensor variables of at least one second sensor, and
• carries out the identification of the driving situation if the roadway variable indicates that uneven terrain and/or a slope is being driven on, wherein in particular provision is made for the roadway variable to be generated by means of a detected acceleration signal, a speed signal, a slope signal or a path signal.

4. Method according to Claim 3, **characterized in that** the period of time in which the drive continues to be activated or operated is specified depending on the determined roadway variable, the detected slope and/or the detected acceleration.

5. Method according to either of Claims 3 and 4, **characterized in that** the period of time in which the drive continues to be activated or operated with constant drive torque M_{M} is selected in such a way that the period of time overlaps with the activation of the drive by next intermittent pedalling by a cyclist.

6. Method according to any of Claims 3 to 5, **characterized in that** the drive is activated depending on the detected slope or the detected underlying surface and/or the detected unevenness in such a way that a specified bicycle acceleration is set or not exceeded.

7. Device for activating a drive of a pedal-driven vehicle, in particular an electric bicycle, wherein the device has a control unit (100), at least one first sensor and a drive (170), the device being suitable for carrying out the method according to any of Claims 1 to 6.

8. Pedal-driven vehicle, in particular an electric bicycle, having a device according to Claim 7.

## Revendications

1. Procédé pour commander l'entraînement d'un véhicule à pédales, en particulier d'un vélo électrique, le procédé
• détectant au moyen d'au moins un premier capteur une quantité de mouvement de rotation qui représente le mouvement de rotation des pédales par le cycliste, et
• commandant l'entraînement (170) du véhicule pour générer une propulsion si la quantité actuelle de mouvement de rotation dépasse une valeur seuil prédéfinie,
**caractérisé en ce que**
le procédé
• enregistre, au moyen d'au moins un premier capteur, une quantité de mouvement de rotation décomposée dans le temps, qui représente le mouvement de rotation des pédales pendant une période d'enregistrement par le cycliste, et
• détecte, en fonction de la quantité de mouvement de rotation décomposée dans le temps, une situation de conduite dans laquelle les pédales sont déplacées essentiellement d'avant en arrière autour de la position horizontale, et
• continue à commander l'entraînement en fonction de la situation de conduite détectée pour générer la propulsion pendant une durée prédéfinie, si la quantité actuelle de mouvement de rotation atteint ou dépasse la valeur seuil prédéfinie.

2. Procédé selon la revendication 1, **caractérisé en ce que** le procédé
• détecte, en tant que quantité de mouvement de rotation, le couple de rotation du cycliste sur les pédales au moyen d'un capteur de couple (120) et/ou la cadence de pédalage du cycliste au moyen d'un capteur de vitesse de rotation (130), et
• détecte la situation de conduite en fonction du couple de rotation du cycliste et/ou de la cadence de pédalage du cycliste.

3. Procédé selon la revendication 1 ou la revendication 2, **caractérisé en ce que** le procédé
détermine, au moyen des valeurs de capteur enregistrées d'au moins un deuxième capteur, une valeur de chaussée qui représente le sol sur lequel se déplace le véhicule, et
procède à la détection de la situation de conduite si la valeur de chaussée indique une conduite sur un terrain accidenté et/ou une montée, étant notamment prévu que la valeur de chaussée soit générée au moyen d'un signal d'accélération détecté, d'un signal de vitesse, d'un signal d'inclinaison ou d'un signal de distance.

4. Procédé selon la revendication 3, **caractérisé en ce que** la durée pendant laquelle l'entraînement continue à être commandé ou actionné est prédéfinie en fonction de la taille de la chaussée déterminée, de la pente détectée et/ou de l'accélération détectée.

5. Procédé selon l'une des revendications 3 ou 4, **caractérisé en ce que** la durée pendant laquelle l'entraînement continue à être commandé ou actionné avec un couple d'entraînement constant M_{M} est choisie de telle sorte que la durée d'activation de l'entraînement soit chevauchée par un coup de pédale suivant donné par un cycliste.

6. Procédé selon l'une des revendications 3 à 5, **caractérisé en ce que** la commande de l'entraînement est effectuée en fonction de la pente détectée ou du sol détecté et/ou de l'inégalité détectée de telle sorte qu'une accélération prédéfinie du vélo soit réglée ou ne soit pas dépassée.

7. Dispositif de commande d'un entraînement d'un véhicule à pédales, en particulier d'un vélo électrique, le dispositif comprenant une unité de commande (100), au moins un premier capteur et un système d'entraînement (170), qui est adapté pour mettre en œuvre le procédé selon l'une des revendications 1 à 6.

8. Véhicule à pédales, en particulier un vélo électrique, comprenant un dispositif selon la revendication 7.
